# EUROPEAN PATENT APPLICATION

(11) **EP 2 394 900 A1**
(43) Date of publication of application: **14.12.2011**
(21) Application number: 10165904.3
(22) Date of filing: 14.06.2010
(51) Int. Cl.: B62M 3/08

(54) **Triangle pedal**

(71) Applicant: Lin, Chang Hui, Siushui Hsiang, Chang hua 50446 (TW)
(72) Inventor: Lin, Chang Hui, Siushui Hsiang, Chang hua 50446 (TW)
(74) Representative: Chaillot, Geneviève

(57) **Abstract**

A triangle pedal contains a body (40) including a circular tube (42) with first threads (43) to screw with an adjustable knob (90), the body (40) including a first and a second triangle plates (50, 52) disposed on a front and a rear ends thereof respectively, the first triangle plate (50) including three first apertures (51), the second triangle plate (52) including three second apertures (53) connecting with an elongated member (54) which includes an adjusting post (70) received therein, the adjusting post (70) including a projection (71) with first positioning screws (72), and the projection (71) including a closed orifice (73) to receive a returning spring, the forcing bar (60) including outer screws (61), a ring (62), and a biasing pillar (63), the biasing pillar (63) including a first conical face (64), the adjustable knob (90) including an opening (91) with second screws (92) to screw with the first threads (43) and second positioning screws (93), a locking piece (80) including a mouth (81) to connect with a bicycle shoe and a first and a second engaging grooves (82, 83).

## Description

### BACKGROUND OF THE INVENTION

### Field of the Invention

The present invention relates to a triangle pedal, and more particularly to a triangle pedal that is used in bicycles

### Description of the Prior Art

A conventional retaining structure used in bicycles is fixed on top and bottom surfaces of a pedal, but when bicycle shoe is locked, the retaining structure has to be turn upward, having inconvenient operation. Furthermore, such a conventional retaining structure can not disperse shearing force resulting from pedaling bicycle, and a gap between a locking piece and a body generates to cause a transmitting loss.

The present invention has arisen to mitigate and/or obviate the aforedescribed disadvantages.

### SUMMARY OF THE INVENTION

The primary object of the present invention is to provide a triangle pedal which is capable of overcoming the shortcomings of the conventional a hydraulic brake.

Another object of the present invention is to provide a triangle pedal that the retaining structure is used to engage the locking piece so that the locking piece connects with the bicycle shoe, and the forcing bar of the retaining structure is engaged and disengaged by rotating the adjustable knob tightly and releasably to lock the triangle pedal quickly.

To obtain the above objectives, a triangle pedal provided by the present invention includes:
a central shaft, a body, a first triangle plate, a second triangle plate, a forcing bar, an adjusting post, a locking piece, and an adjustable knob, wherein the body includes a circular tube with first threads arranged on a rear side thereof to screw with the adjustable knob, the body includes a first and a second triangle plates disposed on a front and a rear ends thereof respectively, the first triangle plate includes three first apertures disposed on three corner points thereof respectively, and the second triangle plate includes three second apertures disposed on three corner points thereof individually, the second aperture connects with an elongated member which includes the adjusting post received therein, the adjusting post includes a projection with first positioning screws disposed on a front end thereof, and the projection includes a closed orifice mounted on a bottom end thereof to receive a returning spring, the forcing bar includes outer screws fixed on a front end thereof, a ring fitted on a middle section thereof, and a biasing pillar arranged on a rear end thereof, the biasing pillar includes a first conical face disposed on a distal end thereof, the adjustable knob includes an opening with second screws disposed on a center thereof to screw with the first threads of the circular tube of the body, and includes a second positioning screws mounted around an inner side thereof, the locking piece includes a mouth arranged on a middle section thereof to connect with a bicycle shoe, and includes a first and a second engaging grooves disposed on a front and a rear ends thereof individually.

### BRIEF DESCRIPTION OF THE DRAWINGS

Fig. 1 is a perspective view showing the exploded components of a triangle pedal according to a preferred embodiment of the present invention;
Fig. 2 is a perspective view showing the assembly of the triangle pedal according to the preferred embodiment of the present invention;
Fig. 3 is a cross sectional view showing the assembly of the triangle pedal according to the preferred embodiment of the present invention;
Fig. 4 is a cross sectional view showing the operation of the triangle pedal according to the preferred embodiment of the present invention;
Fig. 5 is a plan view showing the operation of the triangle pedal according to the preferred embodiment of the present invention;
Fig. 6 is another plan view showing the operation of the triangle pedal according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

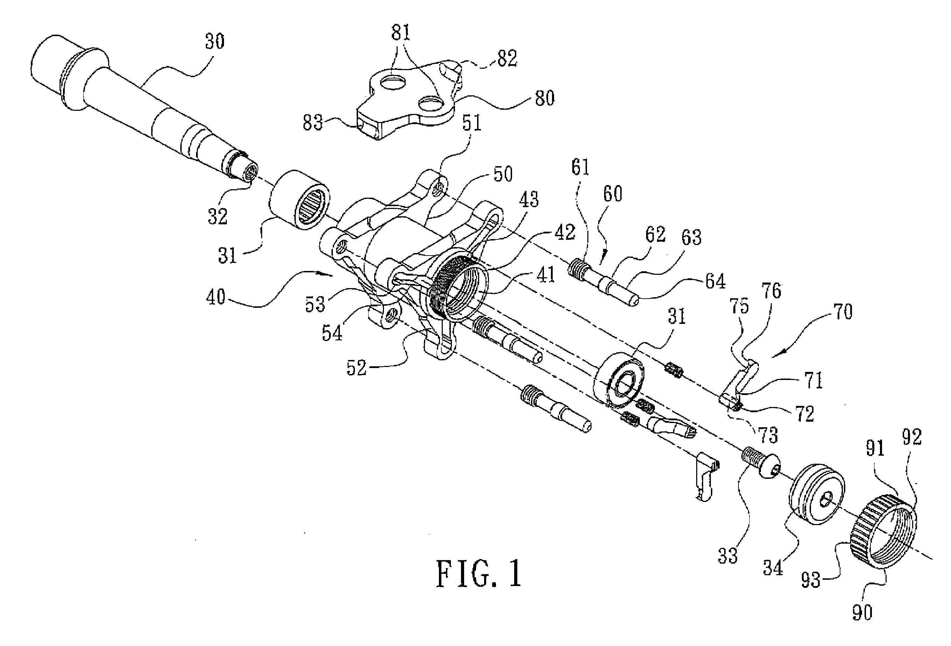

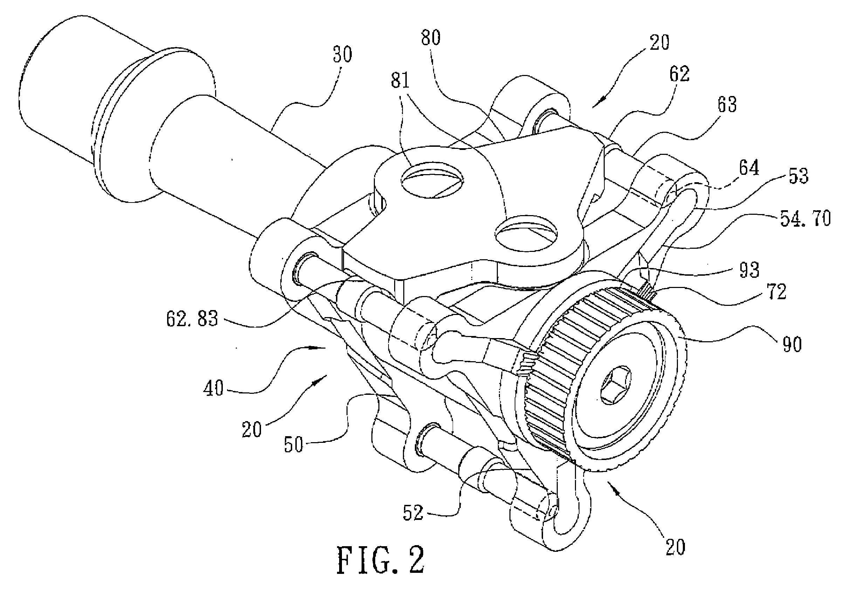

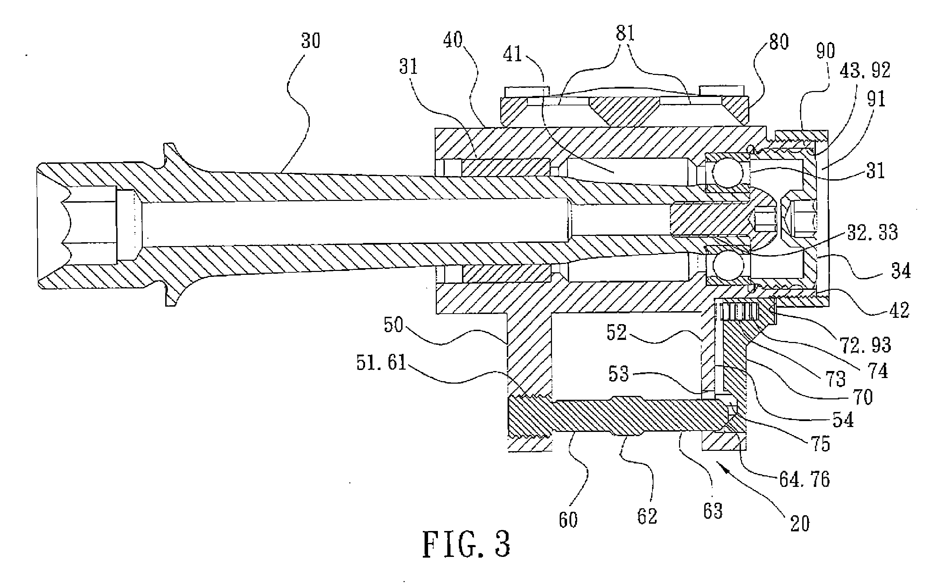

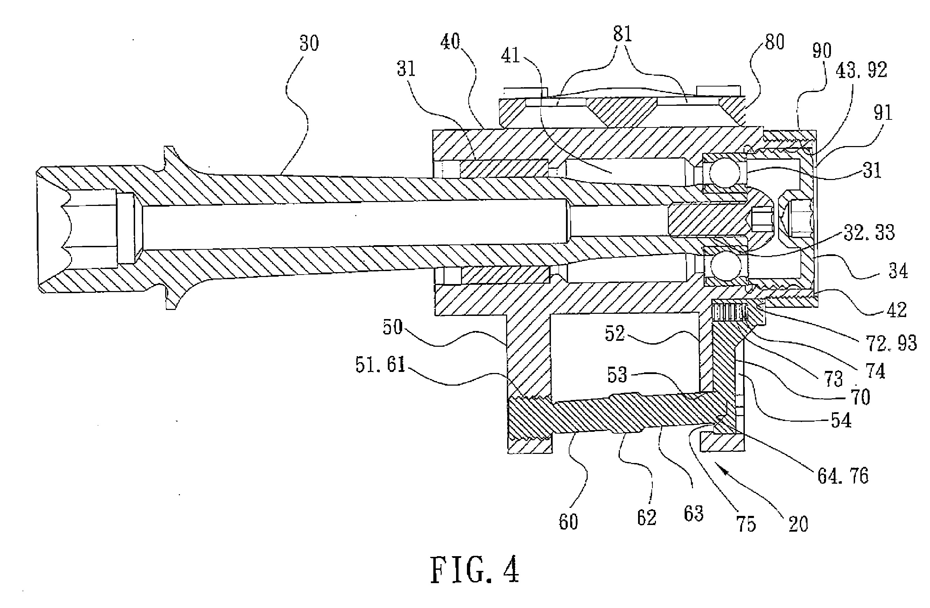

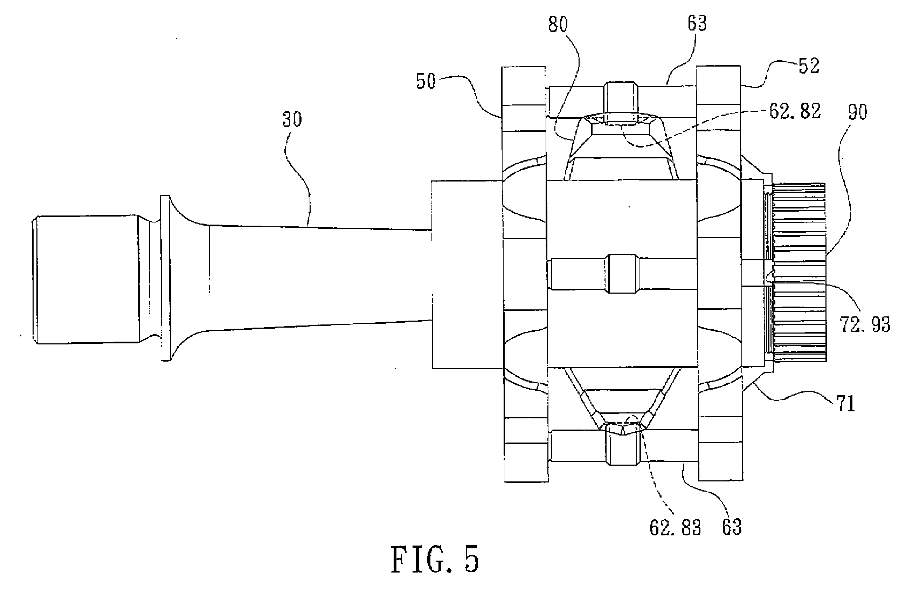

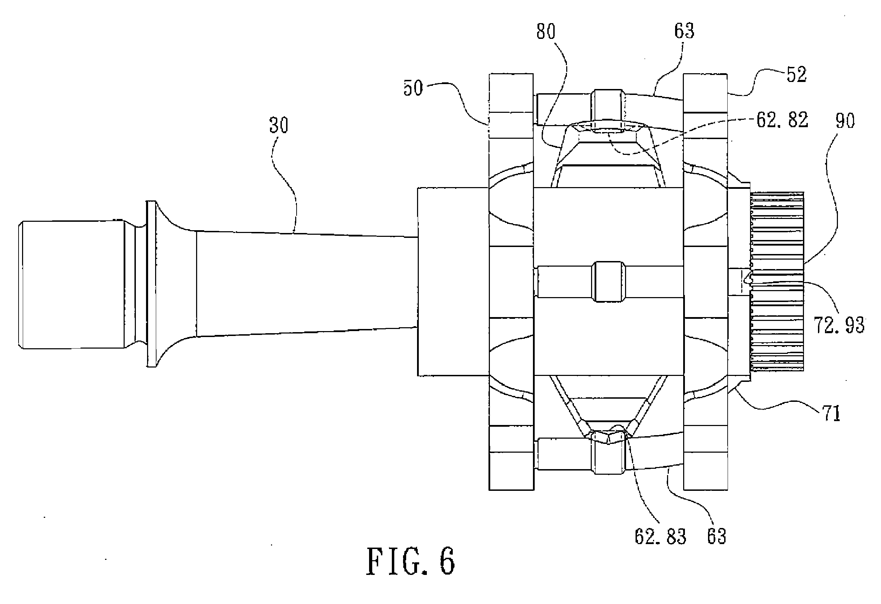

Referring to Figs. 1-6, a triangle pedal in accordance with a preferred embodiment of the present invention is used in bicycles and comprises a body 40 including a first and a second triangle plates 50, 52 disposed on a front and a rear ends thereof respectively, and a retaining structure 20 mounted at each 120-degree position of the first and the second triangle plates 50, 52 so that when a bicycle shoe is locked, the retaining structure 20 is not turned greatly, and a locking piece 80 is retained with the bicycle shoe, the retaining structure 20 including a first triangle plate 50, a second triangle plate 52, a forcing bar 60, an adjusting post 70, and an adjustable knob 90.

The triangle pedal comprises: a central shaft 30, a body 40, the first triangle plate 50, the second triangle plate 52, the forcing bar 60, the adjusting post 70, the locking piece 80, and the adjustable knob 90.

The central shaft 30 includes two bearings 31 fixed on a middle section and a distal end thereof individually to be fitted to the body 40, includes a screw hole 32 secured on the distal end thereof as well to screw with a screw 33; the body 40 includes a through bore 41 formed on a center thereof, the through bore 41 includes the bearing 31 and an dustproof sleeve 34 installed therein to prevent dust and mist from entering the body 40, the body 40 also includes a circular tube 42 with first threads 43 arranged on a rear side thereof to screw with the adjustable knob 90, wherein the body 40 includes the first and the second triangle plates 50, 52 disposed on the front and the rear ends thereof respectively to prevent the body 40 from impact during pedaling the body 40; the first triangle plate 50 includes three first apertures 51 disposed on three corner points thereof respectively, and the second triangle plate 52 includes three second apertures 53 disposed on three corner points thereof individually, the second aperture 53 connects with an elongated member 54 which extends from the corner point of the second aperture 53 toward the circular tube 42 and includes the adjusting post 70 received therein, the adjusting post 70 includes a projection 71 with first positioning screws 72 disposed on a front end thereof, and the projection 71 includes a closed orifice 73 mounted on a bottom end thereof to receive a returning spring 74, and the adjusting post 70 includes a conical pore 75 fixed on a bottom surface of a distal end thereof, and the conical pore 75 includes an obliquely conical surface 76 abutting against a first conical face 64 on a distal end of the forcing bar 60, the forcing bar 60 includes outer screws 61 fixed on a front end thereof, a ring 62 fitted on a middle section thereof, and a biasing pillar 63 arranged on a rear end thereof, the biasing pillar 63 includes the first conical face 64 disposed on a distal end thereof, and the outer screws 61 of the forcing bar 60 is screwed with the second aperture 53 of the first triangle plates 50, the biasing pillar 63 contacts with the second apertures 53 of the second triangle plate 52, and when the adjustable knob 90 is rotated tightly, the biasing pillar 63 of the forcing bar 60 moves toward the center of the body 40 so that the forcing bar 60 engages with the body 40, hence the locking piece 80 is pressed downward to contact with the body 40 tightly to transmit pedaling force completely, and the forcing bar 60 is made of titanium alloy or other metal material.

The adjustable knob 90 includes an opening 91 with second screws 92 disposed on a center thereof to screw with the first threads 43 of the circular tube 42 of the body 40, and includes second positioning screws 93 mounted around an inner side thereof to screw with the first positioning screws 72 of the projection 71 of the adjusting post 70 so that when the adjustable knob 90 is rotated tightly, the adjusting post 70 is pushed, and the obliquely conical surface 76 of the adjusting post 70 engages with the first conical face 64 of the forcing bar 60, so that the biasing pillar 63 of the forcing bar 60 moves toward the center of the body 40, and the forcing bar 60 engages with the locking piece 80. While the adjustable knob 90 is turned releasably, the adjusting post 70 is pushed backward by the returning spring 74 so that the obliquely conical surface 76 of the adjusting post 70 disengages from the first conical face 64 of the forcing bar 60, hence the forcing bar 60 disengages from the locking piece 80.

The locking piece 80 includes a mouth 81 arranged on a middle section thereof to connect with the bicycle shoe, and includes a first and a second engaging grooves 82, 83 disposed on a front and a rear ends thereof and pressed and engages by the ring 62 of the forcing bar 60 so that the locking piece 80 contacts with the body 40 tightly.

Thereby, the retaining structure 20 is used to engage the locking piece 80 so that the locking piece 80 connects with the bicycle shoe, and the forcing bar 60 of the retaining structure 20 is engaged and disengaged by rotating the adjustable knob 90 tightly and releasably to lock the triangle pedal quickly.

While we have shown and described various embodiments in accordance with the present invention, it is clear to those skilled in the art that further embodiments may be made without departing from the scope of the present invention.

## Claims

1. A triangle pedal comprising
a central shaft (30), a body (40), a first triangle plate (50), a second triangle plate (52), a forcing bar (60), an adjusting post (70), a locking piece (80), and an adjustable knob (90), **characterized in that** the body (40) includes a circular tube (42) with first threads (43) arranged on a rear side thereof to screw with the adjustable knob (90), the body (40) includes a first and a second triangle plates (50, 52) disposed on a front and a rear ends thereof respectively, the first triangle plate (50) includes three first apertures (51) disposed on three corner points thereof respectively, and the second triangle plate (52) includes three second apertures (53) disposed on three corner points thereof individually, the second aperture (53) connects with an elongated member (54) which includes the adjusting post (70) received therein, the adjusting post (70) includes a projection (71) with first positioning screws (72) disposed on a front end thereof, and the projection (71) includes a closed orifice (73) mounted on a bottom end thereof to receive a returning spring (74), the forcing bar (60) includes outer screws (61) fixed on a front end thereof, a ring (62) fitted on a middle section thereof, and a biasing pillar (63) arranged on a rear end thereof, the biasing pillar (63) includes a first conical face (64) disposed on a distal end thereof, the adjustable knob (90) includes an opening (91) with second screws (92) disposed on a center thereof to screw with the first threads (43) of the circular tube (42) of the body (40), and includes a second positioning screws (93) mounted around an inner side thereof, the locking piece (80) includes a mouth (81) arranged on a middle section thereof to connect with a bicycle shoe, and includes a first and a second engaging grooves (82, 83) disposed on a front and a rear ends thereof individually.

2. The triangle pedal as claimed in claim 1, wherein each of the first and the second triangle plates (50, 52) includes a retaining structure (20) mounted at each 120-degree position thereof.

3. The triangle pedal as claimed in claim 2, wherein the retaining structure (20) includes the first triangle plate (50), the second triangle plate (52), the forcing bar (60), the adjusting post (70), and the adjustable knob (90).

4. The triangle pedal as claimed in claim 1, wherein the central shaft (30) includes two bearings (31) fixed on a middle section and a distal end thereof individually to be fitted to the body (40), includes a screw hole (32) secured on the distal end thereof to screw with a screw (33).

5. The triangle pedal as claimed in claim 1, wherein a through bore (41) of the body (40) includes the bearing (31) and a dustproof sleeve (34) installed therein.

6. The triangle pedal as claimed in claim 1, wherein the elongated member (54) extends from the corner point of the second aperture (53) toward the circular tube (42).

7. The triangle pedal as claimed in claim 1, wherein the adjusting post (70) includes a conical pore (75) fixed on a bottom surface of a distal end thereof, and the conical pore (75) includes an obliquely conical surface (76) abutting against the first conical face (64) on a distal end of the forcing bar (60).

8. The triangle pedal as claimed in claim 1, wherein when the adjustable knob (90) is rotated tightly, the biasing pillar (63) of the forcing bar (60) moves toward the center of the body (40) so that the forcing bar (60) engages with the body (40), hence the locking piece (80) is pressed downward to contact with the body (40) tightly to transmit pedaling force completely.

9. The triangle pedal as claimed in claim 1, wherein when the adjustable knob (90) is rotated tightly, the adjusting post (70) is pushed, and the obliquely conical surface (76) of the adjusting post (70) engages with the first conical face (64) of the forcing bar (60), so that the biasing pillar (63) of the forcing bar (60) moves toward the center of the body (40), and the forcing bar (60) engages with the locking piece (80); while the adjustable knob (90) is turned releasably, the adjusting post (70) is pushed backward by the returning spring (74) so that the obliquely conical surface (76) of the adjusting post (70) disengages from the first conical face (64) of the forcing bar (60), hence the forcing bar (60) disengages from the locking piece (80).

10. The triangle pedal as claimed in claim 1, wherein after the locking piece (80) is pressed downward by the ring (62) of the forcing bar (60), it contacts with the body (40) tightly.
